# EUROPEAN PATENT SPECIFICATION

(11) **EP 3 568 636 B1**
(45) Date of publication and mention of the grant of the patent: **18.10.2023**
(21) Application number: 18739283.2
(22) Date of filing: 16.01.2018
(51) Int. Cl.: F23G 7/06, F23J 15/00

(54) **POST-COMBUSTION DEVICE AND METHOD**
NACHVERBRENNUNGSVORRICHTUNG UND -VERFAHREN
DISPOSITIF ET PROCÉDÉ DE POST-COMBUSTION

(30) Priority: 16.01.2017 NZ 17728351
(43) Date of publication of application: 20.11.2019
(73) Proprietor: Energy2Cleanair Holdings PTY Ltd As Trustee For Energy2Cleanair Unit trust, Eagle Farm, Queensland 4009 (AU)
(72) Inventor: VOYKA, Danny, Buccan Queensland 4207 (AU); VOYKA, John, Babinda Queensland 4861 (AU); KIDD, Michael, Pinjarra Western Australia 6208 (AU)
(74) Representative: Kancelaria Eupatent.pl Sp. z.o.o
(86) International application number: PCT/AU2018/050024
(87) International publication number: WO 2018/129596

(56) References cited:
- US-A- 3 285 709
- US-A- 3 658 482
- US-A- 3 892 519
- US-A- 3 993 449
- US-A- 4 917 027
- US-A- 5 366 699
- US-A- 6 163 560

## Description

### Technical Field

The present invention relates to post-combustion processing and more particularly to post-combustion processing using a combustible gas mixture.

### Background Art

There are many industries that combust materials, either to produce energy or to get rid of waste. The combustion process produces furnace exhaust gas that can have unacceptable concentrations of toxic chemicals and greenhouse gases, both of which are damaging to the environment.

Post-combustion technology has arisen as a way to partially address this issue. For example, US Patent No. 4,820,500 by Obermuller, describes combusting a flammable gas in the presence of air with furnace exhaust gas. This process is conducted at relatively low temperatures and this teaches that the production of CO and NOx gases are undesirable. The process does result in a more complete burn of the gases, but also causes the release of toxic gases (depending on the nature of the furnace exhaust gas).

WO2015/015447 by Futurenergy Pty Ltd (Futurenergy), describes a combustion system using Magnegas, as described in US Patent No. 6,663,752. Unfortunately, the Futurenergy device is not suitable for long-term continuous usage, as would be required in any continuous furnace operation. Anything beyond short-term usage of the device described in the Futurenergy specification results in intermittent failure of post-combustion and decreasing efficiency that shuts down the combustion process. This can be explosively dangerous and damaging to the equipment. Intermittent failure also results in the undesirable release of unprocessed combustion gases into the environment.

US3658482 discloses an afterburner to be associated with an incinerator or furnace, or other processing equipment for providing complete combustion of the combustible materials in the exhaust gases or process fumes and vapors. The afterburner comprises an outer closed refractory casing, and an inner cylindrical refractory member is spaced inwardly from the outer casing to provide an outer annular chamber therebetween.

US3993449 discloses a low pressure loss, two stage burner wherein a portion of the effluent gases are admitted to a primary burner defining a primary combustion zone, recirculated within the primary combustion zone, mixed with a combustible fuel in the primary combustion zone and ignited by means of an ignition system.

Nothing above should be read as necessarily falling within the common general knowledge.

It would be desirable to produce a device that at least partially overcomes the above-mentioned disadvantages or that at least provides the public with a useful choice.

### Definitions

In this specification, unless the context indicates otherwise:
a) "AS" means Australian Standard;
b) "furnace exhaust gas" is exhaust gas (including any particulates) produced by a furnace. Typically furnace exhaust gas is conventionally exhausted via a flue stack to the atmosphere or post-processing equipment;
c) "connected" means directly connected as well as indirectly connected;
d) "cross section" or variants like "cross sectional" in relation to an area refers the area defined by internal space in a section through an object at right angles to the direction of usual gas flow.
e) "comprise", or variations such as "comprises" or "comprising", will be understood to imply the inclusion of a stated element, integer or step, or group of elements, integers or steps, but not the exclusion of any other element, integer or step, or group of elements, integers or steps;
f) "chamber" means an enclosed space or cavity that is optionally connected to other chambers, ducts or passageways. This definition also encompasses multiple chambers that, in use, function as a single unit;
g) "cooler" means a container, vessel, or apparatus for cooling, such as a heat exchanger;
h) "mode" in a statistical sense refers to the most frequently occurring number found in a set of numbers. The mode is found by collecting and organizing the data in order to count the frequency of each result. For the purposes of the present specification, measurements are rounded to the nearest 5 millimetres;
i) "K" is an symbol for temperature expressed in kelvin;
j) "g" is grams;
k) "mg" is milligrams (10⁻³ grams);
l) "min" is minute or minutes, depending on context;
m) "centrifugal compressor" is a compressor wherein energy is transferred from a set of rotating impeller blades to a gas. The gas flow is radial, and the energy transfer is caused from a change in the centrifugal forces acting on the gas;
n) "T304L" is a type of stainless steel material well-known in the fabrication industry having non-ferrous components of Chromium 17-20%, Nickel 8-10.5%, Carbon up to a maximum of 0.03%, Magnesium up to 2%, Silicon up to 0.75%, Phosphorus up to 0.045%, and Sulphur up to 0.03%;
o) "SCH10" is a standard pipe size per ASME/ANSIB 36.10 "Welded and Seamless Wrought Steel Pipe";
p) "NB" is a nominal bore (inner diameter) expressed in mm;
q) "Nm³" is gas volume in dry cubic metres at standard temperature and pressure (0°C and 101.3 kPa);
r) "CO" is carbon monoxide;
s) "CO₂" is carbon dioxide;
t) "NOx" is a combined term for molecules containing one nitrogen and one or more oxygen atom, such as NO and NO₂;
u) "PM" is particulate matter;
v) "H₂S" is hydrogen sulphide;
w) "STP" means standard temperature and pressure (0°C and 101.3 kPa)
x) "VOC" is a chemical compound based on carbon chains or rings with a vapour pressure greater than 0.01 kPa at 293.15 K (i.e. 20°C) that participate in atmospheric photochemical reactions. The following compounds are excluded from the definition: carbon monoxide; methane; acrylamide; benzene hexachloro; biphenyl; chlorophenols; n-dibutyl phthalate; ethylene glycol; di-(2-ethylhexyl) phthalate (DEHP); 4,4-methylene bis 2,4 aniline (MOCA); Methylenebis; Phenol; and toluene-2,4-diisocyanate.
y) "TVOC" is a grouping of a wide range of VOC to simplify reporting when these are present in ambient air or emissions. In measuring TVOC in the present invention, such substances must be present in polluted air, that is, vapours of gases given off by compounds rather than the liquid phase;
z) "TVOC (propane)" means TVOC measured using a sensor calibrated using propane;
aa) "reducer" is a component in a pipeline that reduces the pipe size from a larger to a smaller bore (inner diameter). The length of the reduction is usually equal to the average of the larger and smaller pipe diameters. There are two main types of reducer: concentric and eccentric reducers. In the present specification, concentric reducers are mainly used. A reducer is independent of fluid flow direction, so a reducer can be used with a reduced diameter upstream and an enlarged diameter downstream;
bb) USEPA means United States Environmental Protection Authority.

The art-skilled worker will appreciate that the above definitions can and should, with suitable consideration for context, apply to the singular and the plural, and also to the tense of verbs, nouns, adjectives and adverbs derived from the above terms.

### Summary of Invention

The present invention provides a post combustion apparatus and a process of post combustion according to the appended claims.

In relation to both of the above aspects:
Preferably, the ratio of the mode of cross-sectional area of the combustion expansion chamber is greater than that of the mode of cross-sectional area of the mixing chamber, more preferably at least double that of the mode of cross-sectional area of the mixing chamber.

It is also preferred for the mode of a cross-sectional combustion exhaust chamber area to be at least double that of the mode of the mixing chamber area.

The combustion exhaust chamber outlet can be connected to an exhaust flue stack. In a currently preferred embodiment, the combustion exhaust chamber is connected to an inlet for the furnace such that, in use, at least some processed furnace exhaust gas is recycled into the furnace. Preferably, the amount of processed furnace exhaust gas entering the furnace is controlled by way of a valve.

It is particularly preferred that the minimum cross-sectional area anywhere along the combustion expansion chamber through to the outlet of the apparatus is greater than the mean cross-sectional area of the mixing chamber.

Oxygen levels in the mixing chamber should be below atmospheric levels. The inventors have found that high levels of oxygen in the mixing chamber often cause the post-combustion gas fuel to undesirably react preferentially with oxygen. It is preferred that the post-combustion gas fuel be allowed to react with the furnace emissions. The exhaust path between the furnace and the exhaust stack should preferably be sealed from the air and no additional oxygen should be introduced into the system.

The exhaust path should preferably be at least the same cross-sectional area as the expansion chamber to minimise back-pressure. Back pressure has been found to degrade the performance of the post-combustion apparatus and process.

Preferably, at least some processed furnace exhaust gas is used as a heat source for generators, preferably by way of a steam-line heat exchanger.

For best results, furnace exhaust gas is preferably cooled to between 360 K and 395 K by the cooler. Preferably the cooler comprises a pre-combustion water jacket, preferably supplied by a compressor pump with water as a cooling medium. Optionally, water heated during the cooling process is fed to a steam generator. More preferably, the steam is cooled to liquid water and recycled.

Preferably, the mixing chamber is between 0.3 m and 1.5 m in length, more preferably 0.8 m to 1.5 m in length. Preferably, the post-combustion gas fuel injection port has at least one nozzle within the chamber, more preferably angled to swirl post-combustion gas fuel at least partially radially perpendicular to the flow direction of the furnace exhaust gas. In a currently preferred embodiment, there are three post-combustion gas fuel injection ports, preferably spaced 0.1-0.3 m apart, more preferably 0.2 m apart and extending in the direction of propagation of the furnace exhaust gas.

The distance from the nozzle closest to the combustion furnace is to be located sufficiently far from the cooler to ensure that all of the furnace exhaust gas has been cooled and mixed sufficiently that no furnace exhaust gas in proximity to the nozzle is above the post-combustion gas ignition temperature, more preferably no greater than 395 K.

The distance from the nozzle nearest to the combustion expansion chamber should be sufficient distance away from it to efficiently mix the post-combustion gas fuel and cooled furnace exhaust gas prior to combustion taking place.

Further nozzles can be supplied to optimise the inflow of post-combustion gas fuel and to maximise the mixing of the gases. The nozzles are preferably angled to swirl the post-combustion gas fuel in the general downstream direction. In one embodiment, a minority of the nozzles (it could be a single nozzle) is directed in a direction oblique to the other nozzles to impart turbulence.

Preferably, the angle of the nozzles is capable of being varied depending on the volume, density and composition of the cooled furnace exhaust gas being mixed with the Post-combustion gas. It is currently preferred that the optimum burning be judged by an increasing roaring sound emanating from the post combustion reaction and the nozzles manually adjusted to achieve optimum burning.

A suitable post-combustion gas fuel will largely depend on the nature of the emissions from the fuel being burned in the furnace. That is a function of the furnace itself and the type of fuel being burned in the furnace. For most practical purposes, the post-combustion gas fuel is a gas capable of combustion in air with an air flame temperature of at least 1,950 °C at STP. Non-limiting gases in this low temperature group include propane, butane, methane and propane-butane mixtures.

It is, however, more preferred for the post-combustion gas fuel to be a gas capable of combustion in air with an air flame temperature at STP of at least 2,000°C for a better reaction. Non-limiting examples are a CO/H₂ mixture (Hydrogen 55-65% and carbon monoxide 30-35%), hydrogen, acetylene, propane, cyanogen and dicyanoacetylene.

The inventors have found that the post-combustion process is most efficient when the furnace exhaust gas is rich in TVOC, particulates and carbon monoxide emissions. It is therefore strongly preferred to have only a single post-combustion chamber in series with the furnace instead of a series of multiple combustion chambers. However, parallel configurations served by a manifold with multiple outlets for larger furnaces are contemplated.

Additionally, to prevent having to cool the furnace exhaust gas too much and to increase safety, the post-combustion gas fuel should preferably have an ignition temperature in air at STP greater than 480°C. Most preferably, the post-combustion gas fuel is a CO/H₂ mixture (Hydrogen 55-65% and carbon monoxide 30-35%) or hydrogen.

The non-return valve is preferably a swing gate check valve, but other valves are known in the industry that are suitable. Any valve chosen should have minimal resistance to opening and should be highly sensitive to backpressure, causing it to close as quickly as possible.

Preferably, a main flow control valve is interposed between the furnace flue inlet and the cooler or between the cooler and the mixing chamber to control the flow rate of the furnace exhaust gas through the gas post combustion apparatus. In a current embodiment, this is a manually-operated valve.

The combustion expansion chamber needs to withstand high temperatures. It is therefore preferably internally ceramic lined, more preferably cast ceramic lined. In a currently preferred embodiment, a Kaolin ceramic clay is employed.

The present invention is not limited to this embodiment as other methods and materials able to protect the chamber are available and known to art-skilled workers, especially those in the aerospace and furnace industries. Particularly preferred are ceramics employed in high-voltage ceramic power pole insulators that can withstand very high temperatures.

The igniter can be anything that raises the temperature of the mixture of gases to ignition point. Currently preferred are a pilot light, a spark plug, a series of spark plugs or combinations of these.

The igniter is preferably located proximal the inlet of the combustion expansion chamber. In a currently preferred embodiment, it is a sparkplug, more preferably a platinum spark plug connected to a 12 V transformer though an ignition coil generating continuous sparks. Art-skilled workers will be aware of this technology from the automotive industry. To ensure the best chance of obtaining continuous ignition, in one embodiment, multiple igniters can be used, preferably multiple spark plugs, most preferably 3 spark plugs. In addition, multiple ignition types can be used, such as spark plugs in conjunction with pilot lights.

The gas power system is preferably connected between the cooler and the mixing chamber. This permits the use of materials that do not need to tolerate the high temperatures of furnace exhaust gas prior to being cooled. Even so, the chosen materials need to realistically survive temperatures in excess of 580 K, so art-skilled workers will generally choose materials typically used in the gas turbine industry. In the currently preferred embodiment, the gas power system is an electric motor connected by belt to a centrifugal compressor incorporating an impeller.

In one embodiment, a matter collection chamber is installed between the combustion expansion chamber and the post combustion exhaust chamber, which matter collection chamber comprises a gas passage and a matter collection vessel. More preferably, the matter collection vessel has at least one magnet in close association with it that, in use, draws magnetised material out of the gas flowing through the gas passage into the matter collection vessel. The at least one magnet is preferably at least one electromagnet, more preferably a series of electromagnets. The series of electromagnets are preferably mounted on brackets located beneath mild steel plate. A series of electromagnets are powered by 240 V A/C mains power.

Conveniently, the matter collection vessel is located, in use, beneath the gas passage. In use, predominantly, the matter collection vessel preferably collects solid matter, more preferably activated carbon. The magnet should be kept relatively cool or it can stop working efficiently or become inoperative. The use of the combination of the water tray assists in keeping the magnets cool enough to function.

In one embodiment, matter collection vessel in a currently preferred embodiment also comprises a water tray between the exhaust flow and the electromagnets that retains particulates, such as activated carbon, in the water even after the electromagnets are turned off. This permits harvesting of particulates and the water also serves to cool the electromagnets.

In a currently preferred embodiment, a U-bend pipe is installed into the apparatus to change direction of flow, more preferably located before the matter collection chamber. The change of direction of flow increases the turbulence of the gas. An alternative option is to install vanes to induce turbulence prior to the matter collection chamber.

Water jackets are preferably installed between the combustion expansion chamber and the extreme downstream location such that the combusted cooled furnace exhaust gas and post-combustion gas fuel mixture is cooled within 2 seconds so that the gas exits the outlet of the apparatus at a temperature lower than 500°C. This assists in preventing the formation of noxious compounds of the dioxin and furan families.

### Brief Description of Drawings

The invention is described below with reference to non-limiting examples as illustrated by the drawings, wherein:
Fig. 1 is a perspective view of a post-combustion apparatus of the invention;
Fig. 2 is a perspective view of a post-combustion apparatus of the invention in conjunction with a furnace;
Fig. 3 is a sectional side view of a portion of the post combustion apparatus of Fig. 1;
Fig. 4 is a sectional side view of a mixing chamber in the post-combustion apparatus shown in Fig. 1;
Fig. 5 is a blown-up view of a nozzle identified as A-A in Fig. 4;
Fig. 6 is a sectional side view through valves located between a mixing chamber and impeller as shown in Fig. 3;
Fig. 7 is a perspective view of a non-return valve in the post-combustion apparatus shown in Fig. 1 with part of the supply pipe removed to expose the elements of the valve;
Fig. 8 is a perspective view of a matter collection chamber in the post-combustion apparatus shown in Fig. 1; and
Fig. 9 is a sectional side view of a matter collection chamber as shown in Fig. 7.
Fig. 10 is a graph of baseline measurements for various emissions from a furnace without being put through a post-combustion process.
Fig. 11 is a graph of measurements for various emissions from a furnace coupled with a post-combustion process.

### Description of Embodiments

The invention is described below with reference to examples. The examples are only preferred embodiments of one or more ways that the invention can be carried out and should not be read as limiting the scope of the claimed invention.

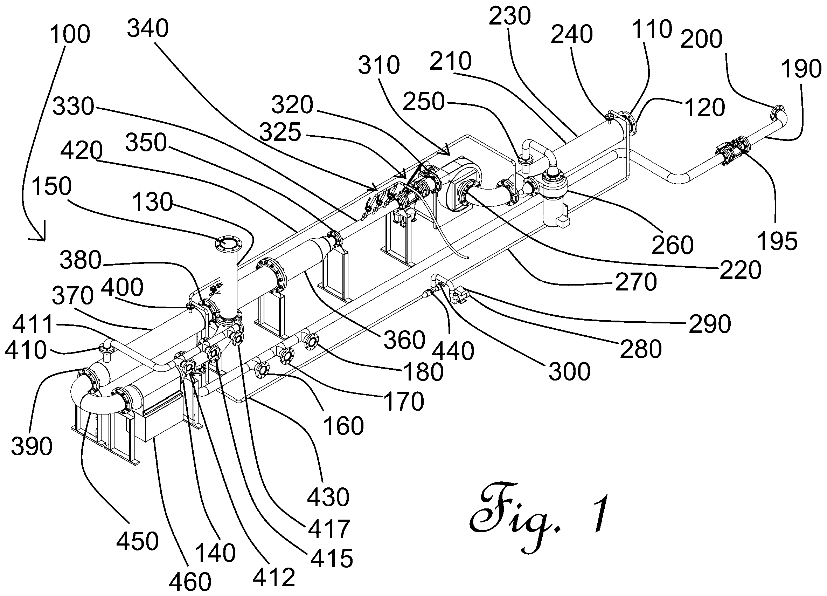

With reference to Fig. 1, a post combustion apparatus, generally indicated as 100 has a furnace flue inlet 110 connected to a furnace flue (not shown in Fig. 1) by way of a furnace flue flange 120. Furnace flue inlet 110 is an extreme upstream location of furnace exhaust gas entering the post combustion apparatus 100.

On the opposite side of post combustion apparatus 100 is a post combustion exhaust chamber 130 that has an inlet 140 and an outlet 150, the outlet 150 being the extreme downstream location of processed furnace exhaust gas exiting the apparatus. Gas flows (in use) from furnace flue inlet 110 to outlet 150.

There are also additional alternative exhaust outlets. Three generating connections 160, 170, 180 in use connect to generators (not shown).

Another alternative exhaust is via a furnace return 190, that in use, returns hot gas to a supplying furnace to aid in furnace efficiency. This connection is affected by way of a flange 200 and controlled by an interposed manual control valve 195.

A cooler 210 has an inlet, which is the furnace flue inlet 110, and an outlet 220. A water jacket 230 acts in use as a cooling element by pumping water via a water inlet 240 into the water jacket 230 and out of a water outlet 250 to a water compressor pump 260.

The compressor pump 260 is connected by a water line 270 to a water supply inlet 280. An electrical water pump 290 is connected between the water line 270 and water supply inlet 280. A manually operated valve 300 is interposed between the electrical water pump 290 and the water supply line 270.

A gas power system, generally indicated as 310, is a centrifugal impeller compressor pump that is connected to the cooler 210 via the outlet 220. An outlet 320 connects to a non-return valve, generally indicated as 325, that is, in turn connected to a mixing chamber 330.

The mixing chamber 330 has three post-combustion gas fuel injection ports 340 and an outlet 350. The mixing chamber 330 is 1.3 m in length.

The outlet 350 is connected to a combustion expansion chamber 360, in turn connected to a tubular heat exchanger 370 through an exhaust gas inlet 380. The heat exchanger 370 has an exhaust gas outlet 390, a steam line inlet 400 and a steam line outlet 410 connected to an exhaust steam line 411. Steam generator connection flanges 412, 415 and 417 permit connection of the exhaust steam line 411 to steam driven electrical generators (not shown).

The steam line inlet 400 is connected via a steam supply line 420 to the water compressor pump 260. The steam line inlet 400 is also connected via a water supply line 430 to a manually operated valve 440 connected to the water supply 280 via the electrical water pump 290.

A U-bend pipe 450 is connected to the exhaust gas outlet 390 at one end and a matter collection chamber 460 at the other end.

Throughout the drawings, connections between elements are typically achieved by way of complementary flanges that are connected together by nuts, bolts and washers in the usual way. These flanged connections are depicted in the drawings but are not necessarily numbered herein in the interests of decluttering the drawings.

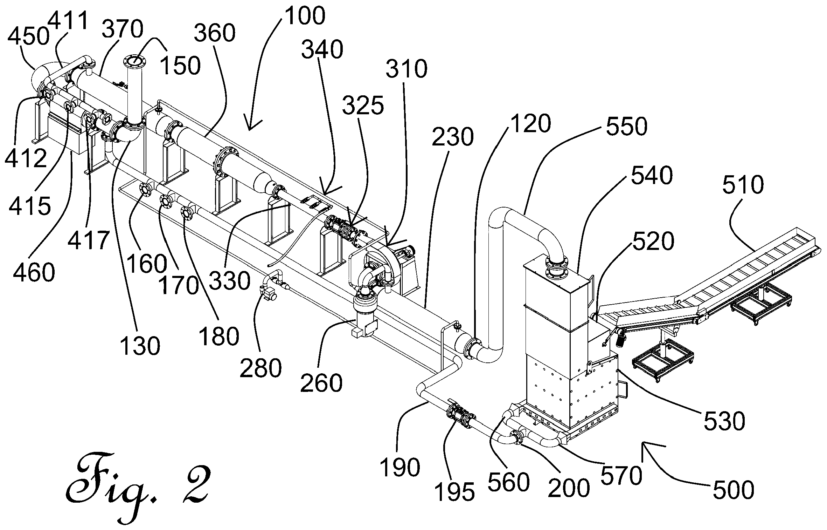

With reference to Fig. 2, the post-combustion apparatus 100 as shown in Fig. 1 is shown connected to a furnace, generally indicated as 500. In the interests of succinctness, the reader is directed to the explanation of the reference numerals in relation to the post combustion apparatus 100 in Fig. 1, which have the same meanings in Fig. 2. Not all reference numerals shown in fig. 1 are shown in Fig. 2 in the interests of decluttering Fig. 2.

The furnace 500 is a commercial incineration chamber furnace, model: Midi Waste Incinerator by Probum Waste Incinerators. It has a conveyor 510 connected to a door 520, that permits entry of waste material for combustion (not shown) from the conveyor 510 into a furnace combustion chamber 530, in turn connected to a furnace exhaust chamber 540, in turn connected to a furnace flue 550.

The furnace flue 550 is connected to the furnace flue flange 120.

Furnace return pipes 560 and 570 are connected at one end thereof to the lower end of furnace combustion chamber 530. The furnace return pipes 560 and 570 are connected at the other end thereof to the furnace return 190 at the flange 200.

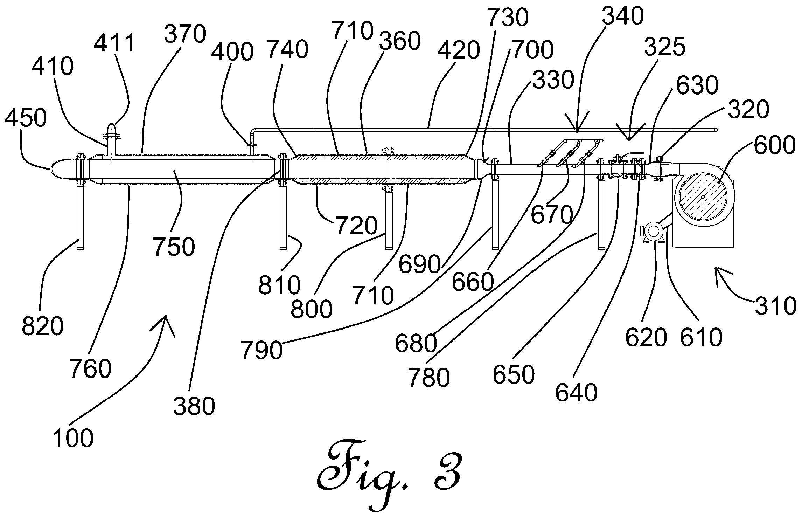

With reference to Fig. 3, a portion of the post combustion apparatus 100 is shown. Elements of the same numbers as appear in earlier figures are identical and are not re-described here. The reader is directed to the earlier description for these reference numerals.

The gas power system 310 has an impeller 600 driven by a pulley (not shown) connected via a belt 610 to an electric motor 620 The impeller is rated to at least 580 K. The impeller 600 is an Aerotech branded, Model HP184 steel housed 500mm impeller with a 120mm diameter outlet and a 150mm diameter inlet connected by a direct drive connected to a 415 volt 4kW electric motor 620.

The outlet 320 connects to a reducer 630 that reduces the inner pipe diameter to 100 mm and is connected to the non-return valve 325. The non-return valve 325 consists of a swing gate check valve 640 in conjunction with a manually operated ball valve 650 for emergency cut-off.

The ball valve 650 is connected to the mixing chamber 330. The mixing chamber 330 is made from 100 mm NB SCH10 welded pipe T304L. The injection ports, generally indicated by 340, consist of 3 injectors 660, 670 and 680.

At the downstream end of the mixing chamber 330 is a reducer 690 that expands the inner diameter from 100mm to 200mm. On the reducer 690 is a platinum spark plug 700 igniter connected to a 12 V transformer though an ignition coil generating continuous sparks (not shown).

The reducer 690 opens into the combustion expansion chamber 360, which has a ceramic lining 710 of refractory ceramic. The ceramic lining 710 has a 200 mm NB and a lining thickness of between 40 to 48 mm.

The ceramic lining 710 is housed within 300 mm NB SCH10 T304L welded pipe 720, connected to 300x200mm NB SCH10 T304L reducers 730, 740 at each end of the combustion expansion chamber 360.

The ceramic lining 710 is created by forming a mould by inserting a plastic pipe (not shown) with an outer diameter of 200mm into the welded pipe 720, thereby forming a mould filling cavity. A pumping hole is formed in the one end of the plastic pipe (not shown). A castable high alumina low cement refractory powder (by weight: Al₂O₃ 84%, SiO₂ 7.5%, CaO 3.3%, Fe₂O₃ 1.3%, alkalies 0.23% and TiO₂ 1.5%) is mixed with water using an electric mixer to make up to 4.4-5.5% by weight water. This forms a pumpable slurry that is pumped through the pumping hole (not shown) to fill the mould (not shown). The pumping hole is sealed once the mould is filled. The mould is agitated until the ceramic is set. Once dry, the plastic pipe (not shown) is removed and gaps and cracks in the ceramic lining 710 are filled in using an air-setting refractory wet mortar (not separately shown) comprising by weight: Al₂O₃ 42%, Fe₂O₃ 0.7%, CaO(+MgO) 0.4%, SiO₂ 45%, alkalies 3.5% and TiO₂ 1.5%. The ceramic lining 710 is permitted to dry and is gradually heated to operational temperature and maintained there for a few hours prior to operational use.

The combustion expansion chamber 360 is connected to the heat exchanger 370 via the exhaust gas inlet 380.

The heat exchanger 370 has an exhaust gas passage 750 surrounded by 200 mm NB SCH10 welded pipe T304L. A water jacket 760 of tapered 300 mm NB SCH10 welded pipe T304L surrounds the exhaust gas passage 750. The water jacket 760 houses the steam line inlet 400 and the steam line outlet 410, in turn connected to the steam supply line 420 and the exhaust steam line 411, respectively.

The various parts of the post-combustion apparatus are supported on pipe supports 780, 790, 800, 810 and 820 that, in use, maintain the exhaust gas flow in a substantially horizontal plane. While these are shown in other drawings, they are not necessarily numbered in the interests of reducing clutter.

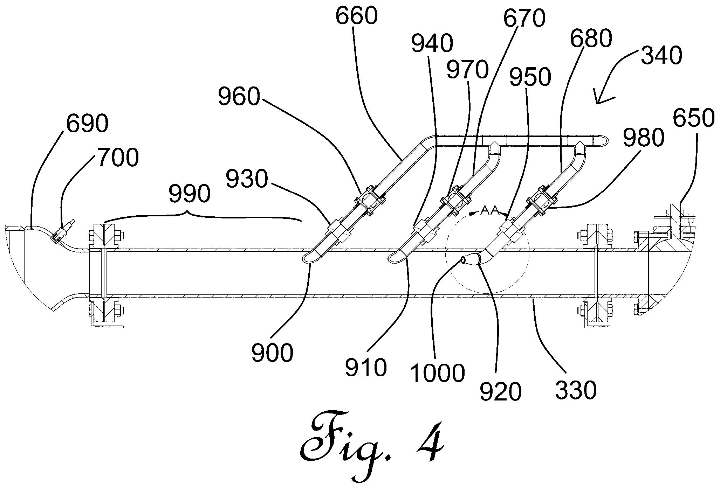

With reference to Fig. 3 and Fig. 4, the mixing chamber 330 is shown flanked by the ball valve 650 and the reducer 690 in Fig. 4 (both of which are only partially shown in this cut-away view).

The injection ports, generally indicated as 340, consist of the injectors 660, 670 and 680, each of which has angled nozzles 900, 910 and 920, respectively. The angled nozzles 900, 910 and 920 terminate into the mixing chamber 330 and can be swivelled within the mixing chamber 330 by the use of each of adjustment nuts 930, 940 and 950 (respectively) about gas-proof fittings 960, 970 and 980 (respectively). Angled nozzles 900 and 910 are drawn facing away from the point of view whereas nozzle 1000 is drawn facing laterally. Angled nozzles 900 and 910 are configured, in use to concentrically swirl the gas in the mixing chamber 330, whereas nozzle 1000 is configured to introduce turbulence to the gas in the mixing chamber 330.

The injectors 660, 670 and 680 are constructed from 25 mm NB SCH10 welded pipe T304L. The injectors 660, 670 and 680 are spaced 200 mm apart and are angled at 45° to the centreline of the chamber 330. A mixing length 990 is defined between the angled nozzle 900 and the end of the mixing chamber 330, which is about 0.48 m in length.

Nozzles 900, 910 and 920 are composed of metal, each having a reduced inner diameter of 10mm at its terminus (only terminus 1000 is shown for nozzle 920, but the others are similarly configured).

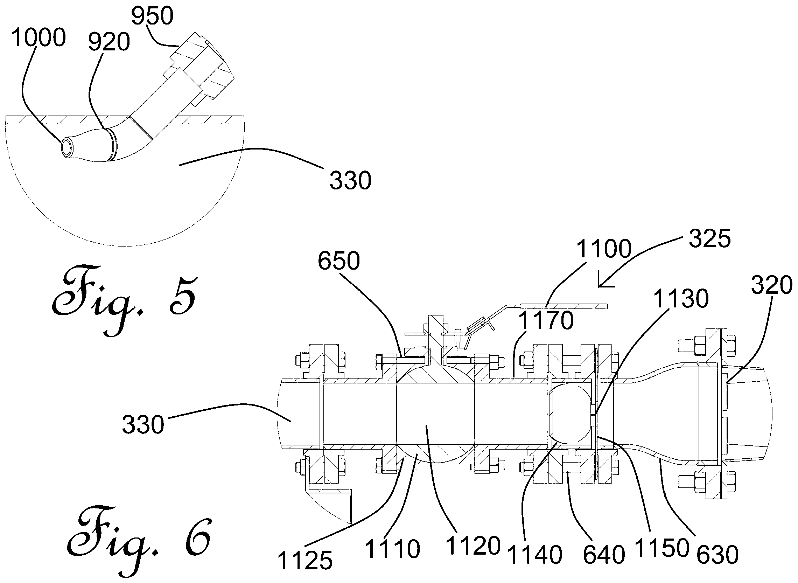

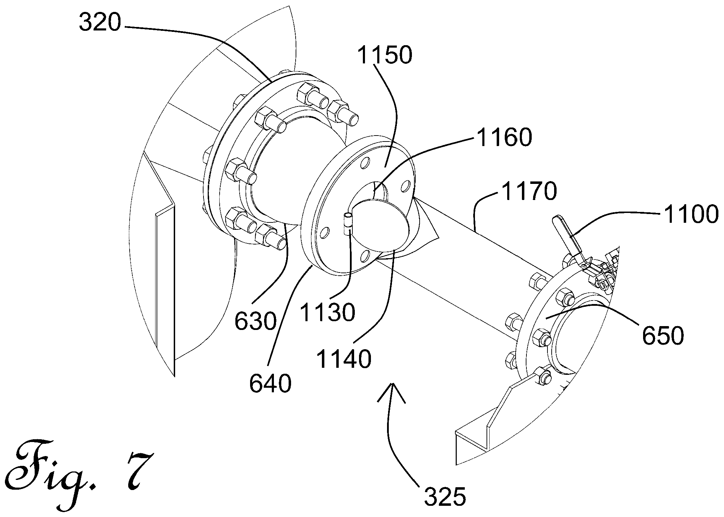

With reference to Fig. 6 and Fig. 7, the non-return valve, generally indicated as 325, is shown, including the swing gate check valve 640 and the ball valve 650 connected between the gas power system outlet 320 and the mixing chamber 330. Swing gate check valve 640 and the ball valve 650 are independently operable.

The ball valve 650 has a handle 1100 connected to a ball 1110 in a seat 1125 that has a through bore 1120 that is shown in an open configuration that permits gas to pass through the ball valve 650. If the handle 1100 is rotated 90 degrees from that as shown, then the through bore 1120 will be occluded by the seat 1125 and the ball valve 650 will be in its closed configuration (not shown).

The swing gate check valve 640 has a hinge 1130 that hinges a sealing flap 1140 with a sealing plate 1150. The sealing plate 1150 has an orifice 1160. A connecting pipe 1170 (only partially shown in Fig. 7) connects the swing gate check valve 640 to the ball valve 650.

The sealing flap 1140 is substantially circular with a diameter of 91 mm whereas the orifice 1160 has a diameter of 92 mm. in use, the sealing flap 1140 is not able to swing back to a position upstream of the normal direction of the flow of emissions as it has been designed to seal against the sealing plate 1150.

The hinge 1130 is cut at a very slight diagonal which in a situation where there is no movement of gas causes the flap 1140 to close under its own weight. This is the same principle as described in US284084 to HICKEY.

The flap 1140 will open as soon as the flow begins and will be held open by the flow. In the case of back pressure, the flap 1140 will close. Because the flap 1140 is sealing against the sealing plate 1150 (acting as a flange with a lesser diameter than the orifice 1160), the flap 140 is slightly smaller than the diameter of the connecting pipe 1170.

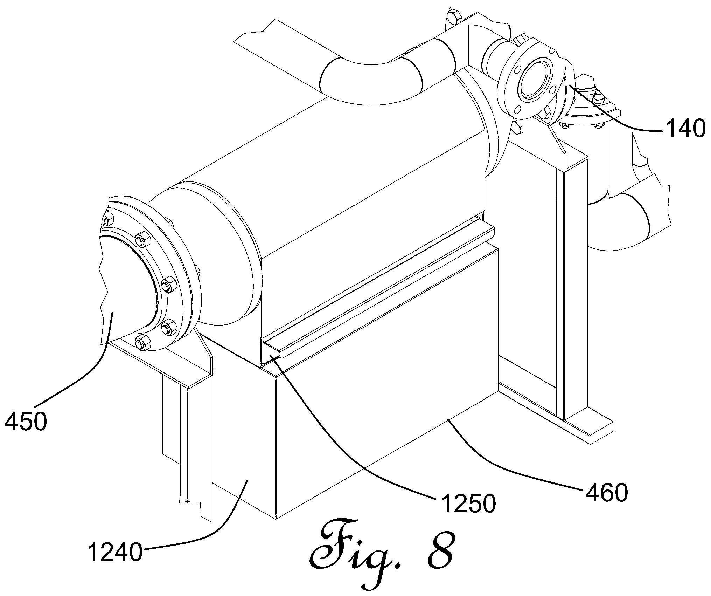

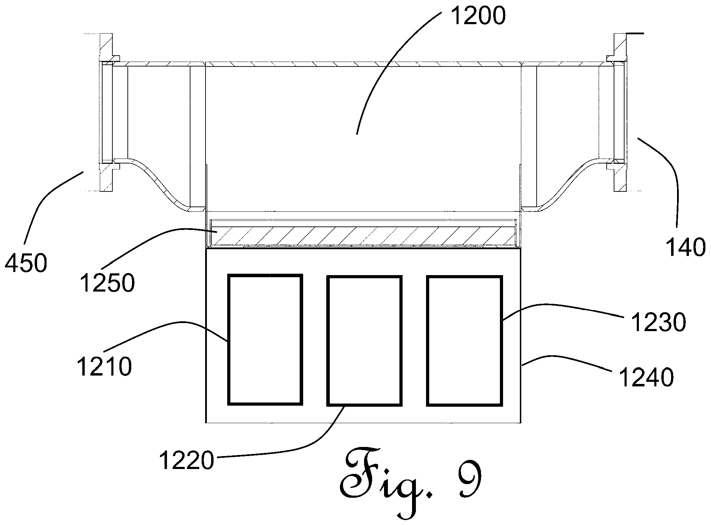

With reference to Fig. 8 and Fig. 9, the matter collection chamber 460 is installed between the U-bend pipe 450 and the combustion exhaust chamber inlet 140. A gas passage 1200 permits passage of gas between the U-bend pipe 450 and the combustion exhaust chamber inlet 140.

Three electromagnets 1210, 1220, 1230 that are 240V A/C Commercial Electro-Magnetic Base Power 13500N Magnetic Force from Techstylegroup are located in a 6mm material thickness stainless steel sealed enclosure 1240. A water tray 1250 is located beneath the gas passage 1200 that is supplied with a constant supply of water to replace water that is evaporated during operation.

### In use

With reference to the drawings, in use, the furnace 500 is fed by the conveyor 510 with waste material to be incinerated (not shown). The waste material (not shown) enters the furnace combustion chamber 530 via the door 520, where it is combusted.

Furnace exhaust gas (not shown) and particulates produced by the combustion pass up through the furnace exhaust chamber 540 and into the furnace flue 550. Furnace exhaust gas (not shown) passes into the post-combustion apparatus 100 via furnace flue inlet 110. Furnace flue inlet 110 is an extreme upstream location of furnace exhaust gas (not shown) entering the apparatus post combustion apparatus 100.

The furnace exhaust gas passes into the cooler 210, where it is cooled by the cooling jacket 230 by water pumped by water compressor pump 260 into the water inlet 240, which exchanges heat with the furnace exhaust gas and exits the cooling jacket 230 via the water outlet 250.

The compressor pump 260 equalises the pressure and level between the water lines. Water is driven via hot water outlet 250 by compressor pump 260 through a steam supply line 420 to the heat exchanger 370 steam line inlet 400.

For best results, the furnace exhaust gas is cooled to between 340 K and 395 K by the cooler 210. The cooled furnace exhaust gas is drawn into the gas power system 310 via the outlet 220.

The electric motor 620 drives the impeller 600 to draw cooled furnace exhaust gas through the gas power system from the cooler 210 and propel it onward via outlet 320.

The propelled cooled furnace exhaust gas passes through the reducer 630 and through the non-return valve 325.

In the case of a blow-back in the post-combustion apparatus 100, the swing gate check valve 640 closes by the upstream force of the blow-back causing sealing flap 1140 to hinge closed and seal against sealing plate 1150, preventing the return of the furnace exhaust gas back to the furnace via orifice 1160. Once blow-back pressure reduces to less than that created by the gas power system 310, sealing flap 1140 hinges open again by the pressure exerted by upstream furnace exhaust gas. Sealing flap 1140 is designed to be as light as possible while still allowing sufficient protection against blowback.

An emergency cut-off can also be effected by rotating the handle 1100 90° from its open position as depicted in Fig. 6 to its closed position, thereby isolating the post combustion apparatus downstream of the non-return valve 325.

The propelled cooled furnace exhaust gas enters the mixing chamber 330 and is mixed with a Post-combustion gas via the injection ports 340 supplied via the three injectors 660, 670 and 680 out of nozzles 900, 910, and 920 (respectively). The nozzles are angled to impart a swirling motion to the Post-combustion gas that assists in its mixing with the furnace exhaust gas.

The post-combustion gas used for the purposes of this example was either hydrogen or a CO/H₂ mixture that has the following percentage by weight: Hydrogen 55-65% and carbon monoxide 30-35%.

The nozzles 900, 910, and 920 are angled prior to use within the mixing chamber 330 by use of adjustment nuts 930, 940 and 950, depending on the volume, density and composition of the cooled furnace exhaust gas being mixed with the Post-combustion gas. The optimum burning is judged by the intensity of the roaring sound emanating from the post combustion reaction. The efficiency of the combustion process improves as the intensity of the roaring sound increases.

Care must be taken in adjusting the nozzles and furnace exhaust gas flow rate to ensure that the furnace exhaust gas has been cooled such that no furnace exhaust gas in proximity to any of the nozzles 900, 910 and 920 is above the Post-combustion gas ignition temperature, and for a safety margin no more than 395 K.

The mixture ratio and flow rates of Post-combustion gas and furnace exhaust gas into the mixing chamber is not fixed and depends on the type of waste product being burned. The ratios and flow rates would be increased or decreased to achieve the most intense audible 'roar'.

The mixed gases exit the mixing chamber via the outlet 350 and enter the reducer 690. The platinum spark plug 700 is continuously sparking and provides an ignition source for the mixed gases.

The mixed gases ignite and expand into the combustion expansion chamber 360. This ignition reaction is exothermic and produces considerable heat. The ceramic lining 710 acts as a thermal barrier, preventing critical damage to the 300mm NB SCH10 T304L welded pipe 720. The combusted mixed gases become exhaust gas.

The exhaust gas is driven to the tubular heat exchanger 370 and enters via the exhaust gas inlet 380 into the exhaust gas passage 750.

Water is introduced into the water jacket 760 via steam line inlet 400 from the steam supply line 420 and the water supply line 430, driven by water compressor pump 260 and electrical water pump 290, respectively.

The exhaust gas in the gas passage 750 is cooled by the water in the water jacket 760. The water in the water jacket 760 is heated to steam through this cooling process.

Steam leaves the water jacket 760 via the line outlet 410 and travels through the exhaust steam line 411. The steam generator connection flanges 412, 415 and 417 connected to the exhaust steam line 411 supply steam to connected steam driven electrical generators (not shown) that generate electricity.

Cooled exhaust gas leaves the heat exchanger 370 via exhaust gas outlet 390 and passes through U-bend pipe 450 to enter the matter collection chamber 460 and flows along the gas passage 1200 towards the combustion exhaust chamber inlet 140.

Ionised and/or magnetised materials in the exhaust gas in the gas passage 1200 are magnetically attracted to the three electromagnets 1210, 1220, 1230 that have a 240V A/C supply applied. The ionised and/or magnetised material enters the water tray 1250 that has water in it and this prevents escape of the ionised and/or magnetised material once the 240V A/C supply is switched off.

The exhaust gas leaves the matter collection chamber 460 via the combustion exhaust chamber inlet 140 into the combustion exhaust chamber 130. Some gas is supplied to generators via generator connections 160, 170 and 180. A further quantity of remaining exhaust gas entering the combustion exhaust chamber 130 via inlet 140 passes through the furnace return 190 and furnace return pipes 560 and 570 and into the lower end of furnace combustion chamber 530 and acts as a heated combustion gas to aid in furnace efficiency.

Another quantity of the remaining exhaust gas entering the combustion exhaust chamber 130 via inlet 140 is exhausted to the atmosphere via outlet 150.

### Experimental results H₂/CO

Testing of the efficacy of the post-combustion apparatus and process was conducted by an independent testing laboratory, SIMTARS (ABN 59 020 847 551, based in Queensland Australia). The laboratory assessed the efficiency of the Combustible Gas System in reducing air emissions including general gases (CO, CO2, NOx, total VOCs and H2S) and particulate matter (PM) when burning mixed waste materials.

It was found that the post-combustion apparatus started most easily if not exposed to furnace emissions when starting up from cold. Emissions added after the post-combustion apparatus had already started running helped to prevent fouling of the spark plug 700. An oxyacetylene pilot can be used to initiate the post-combustion apparatus if the spark plug 700 becomes fouled. The spark plug 700 is defouled by the post-combustion process when at temperature.

The mixed waste materials in the upstream furnace 500 during testing were: tyres and other rubber materials, plastics, a small lead battery, polystyrene / packaging foam, coal, rags soaked in sump oil and other general waste items.

Removal efficiency was calculated by comparing untreated baseline emissions freely flowing through the post-combustion apparatus with the post-combustion gases and to those obtained when the post-combustion apparatus was used with a post-combustion gas, being a CO/H₂ mixture of: Hydrogen 55-65% and carbon monoxide 30-35% gases. Results of the testing are set out in Table 2.

The impeller 600 was driven at 50 Hz for this testing.

Testing parameters were conducted in accordance with various standards, as set out in Table 1.

**Table 1: Test methods**

| **Parameter** | **Test Method** | **ISO Equivalent** | **Analysis** | **Comments** | **NATA** |
|---|---|---|---|---|---|
| Sample plane criteria | AS 4323.1 | ISO9096 | 1 | A, B | Yes |
| Gas velocity and temperature | USEPA Method 2 | ISO10780 | 1 | Nil | Yes |
| Stack gas density | USEPA Method 3 | - | 1 | Nil | Yes |
| Oxygen & carbon dioxide | USEPA Method 3A | - | 1 | B | Yes |
| Stack gas water vapour | USEPA Method 4 | - | 1 | Nil | Yes |
| Particulate matter- total | AS 4323.2 | ISO9096 | 1 | A, B | Yes |
| Oxides of nitrogen- as NO₂ | USEPA Method 7E | - | 1 | C | Yes |
| Carbon monoxide | USEPA Method 10 | - | 1 | C | Yes |
| Volatile organic compounds | USEPA Method 18 | - | 1 | Nil | Yes |
| Hydrogen Sulphide | USEPA Method 18 | - | 1 | Nil | Yes |

**Table 2 - Test results CO/H₂ post-combustion gas**

| **Release Point Parameter** | **Test Result Baseline** | **Test Result using Post-combustion** | **Variation from Baseline** | **Unit of Measure** |
|---|---|---|---|---|
| Sampling Time | 16 | 32 | n/a | min |
| Average exhaust velocity | 2.40 | 4.19 | +76% | m/sec |
| Average exhaust temperature | 72 | 305 | +323% | °C |
| Moisture Content | 15 | 16 | +9% | % |
| Stack volume flow rate | 3.6 | 3.7 | +5% | Nm³/min |
| Carbon Dioxide Percentage | 3.7 | 6.4 | +76% | vol-% |
| Oxygen Percentage | 16.8 | 15.5 | -8% | vol-% |
| Carbon Monoxide | 2,250 | 44 | -98% | mg/Nm³ |
| Nitrogen Oxides (NOx as NO₂) | 222 | 57 | -74% | mg/Nm³ |
| Particulate Emission Rate | 0.48 | 0.03 | -94% | g/min |
| TSP (total solid particulate matter) | 158.8 | 8.9 | -94% | mg/Nm³ |
| TVOC (Propane) | 103.8 | 36.5 | -65% | mg/Nm³ |
| TVOC Emission Rate | 0.32 | 0.11 | -64% | g/min |
| H₂S | < 1.52 | <1.52 | n/a | mg/Nm³ |

At the end of the test, what remained in the furnace 500 was several handfuls of white ash / carbonaceous materials, lead from the battery and metal wires left from the tyres.

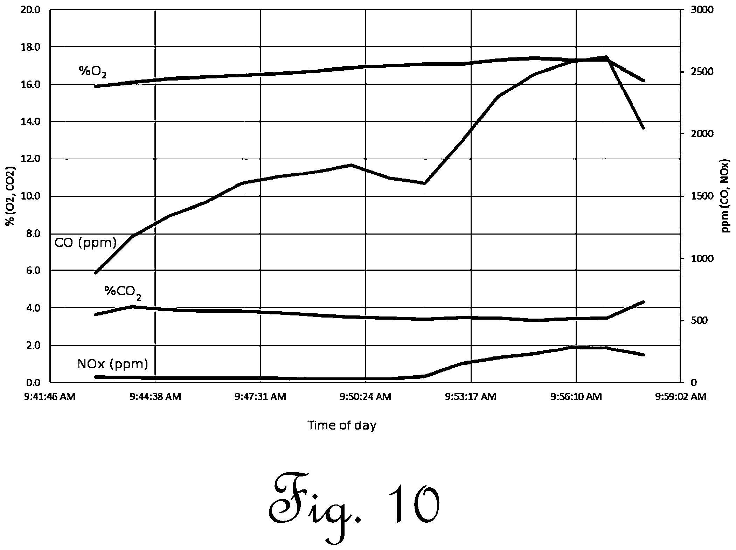

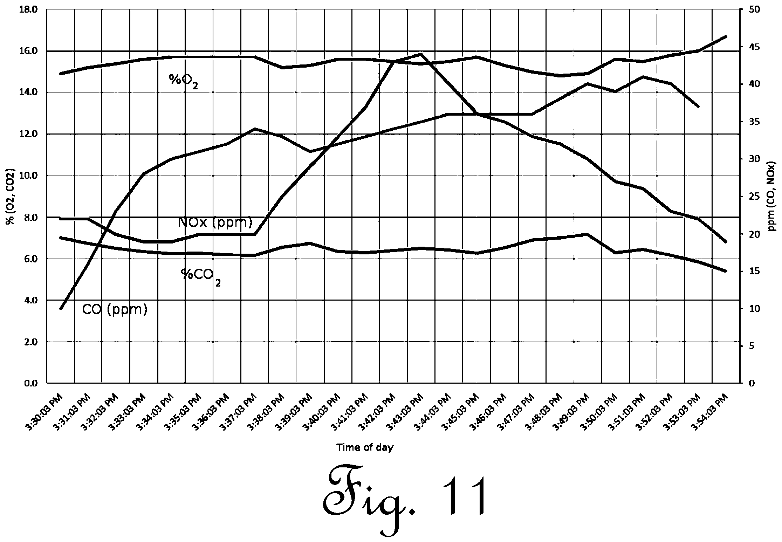

Fig. 10 shows the baseline emissions for some of the parameters in Table 2 over a period of time. Fig. 11 shows the post-combustion emissions for some of the parameters in Table 2 over a period of time.

Variations in the emissions shown in both Fig. 10 and Fig. 11 are due to the heterogeneous nature of the materials burned in the furnace 500. Note that the scales for the parts per million (ppm) measurements in Fig. 10 and Fig. 11 are different.

### Experimental results H₂

Further testing was conducted to demonstrate the efficacy of the post-combustion apparatus with a different post-combustion gas, hydrogen.

For the following tests, a Testo 330i LX Advanced flue gas analyzer kit was used to obtain the results from the exhaust stack. Due to issues with fouling of the sensor, baseline figures could not be obtained, but these are expected to be similar to those obtained during the earlier testing in Table 2.

Table 3 shows the results from this testing. Results were taken when the results stabilised.

**Table 3**

| **Stack temp °C** | **O2 %** | **CO ppm** | **CO2 %** | **Furnace Fuel** |
|---|---|---|---|---|
| 416 | 15 | 160 | 3.5 | small piece of polyethylene terephthalate Plastic bottle |
| 384 | 13.7 | 102 | 4.5 | Full terephthalate plastic bottle |
| 409 | 14 | 96 | 3.95 | Rubber tyre (small piece) |
| 409 | 13 | 80 | 4.48 | Rubber tyre (large piece) |
| 465 | 12 | 61 | 5 | triple previous rubber quantity (large load) |

Counter-intuitively, the post-combustion process performed progressively better the more emissions that were released from the furnace 500. The CO value dropped when a complete plastic bottle was added to the furnace 500. Likewise, pieces of a vehicle tyre caused better results the more that was added to the furnace.

While it was not possible to get baseline quantitative emissions data from the stack, when the post-combustion process was disengaged while the furnace 500 was burning rubber tyre, the factory where the testing was being conducted quickly filled with noxious black smoke to such a degree that is was not possible to make out visual details more than a few metres away. This required an evacuation of the building. In contrast, when the post-combustion process was running, the emissions were clear and testing personnel could comfortably remain in the factory.

At 50Hz, post-combustion was taking place in the mixing chamber 330 instead of in the combustion expansion chamber 360. This was expected behaviour as hydrogen gas has less inertia than the comparatively heavier CO/H₂ gas used in earlier testing.

The impeller 600 was driven at 60Hz for this testing resulting in a higher flow rate than the CO/H₂ testing in Table 2. At this higher flow rate, combustion correctly took place in the combustion expansion chamber 360.

The flow rate of the exhaust at the stack was 3.36 Nm³/min, slightly higher than that in the testing results in Table 2 as a result of the increase in the impeller speed 600. 0.54 Nm³/min of hydrogen gas was being introduced into the mixing chamber 330 in the final test in Table 3.

Additional testing was conducted where the matter collection chamber 460 was inoperative by having the water tray 1250 dry and the electromagnets 1210, 1220, 1230 inoperative. The results showed an increase of carbon monoxide emissions to about 800 ppm - 1,000 ppm, which is considerably above the less than 100 ppm expected from earlier testing but much lower than baseline readings of 2,250 ppm found in Table 2.

Smoke emissions from the furnace 500 at the time the matter collection chamber 460 was inoperative were relatively low due to most of the furnace fuel having been burned compared to earlier testing and based on the earlier results showing that the higher the concentration of emissions increase efficiency of the post-combustion process, this also contributed to the higher emissions.
Additional qualitative tests and modifications made for testing purposes

Further qualitative tests were conducted where the carbon monoxide output values were monitored showed that increasing the nozzle pressure but decreasing the nozzle aperture increased efficiency. Decreasing the number of nozzles made the post-combustion process less efficient.

The post-combustion process has been run using an oxy-acetylene pilot light instead of the spark plug 700 without significant change to the results obtained.

The use of two or three spark plugs 700 spaced circumferentially around reducer 690 has also slightly increased the efficiency of the post-combustion process, especially in its cold start-up phase.

The impeller has been allowed to be free-running once post-combustion has started and is at its operating temperature. In the case of CO/H₂, the post-combustion process drew through enough material to function adequately. A free-running impeller when using hydrogen gas is contraindicated.

It will be appreciated by workers in the relevant field that modifications to the above examples can be made that will still fall within the scope of the present invention defined by the claims.

It will be appreciated that the invention broadly consists in the parts, elements and features described in this specification, which when compared to prior art relating to the field, should serve to illustrate the novelty of the invention described herein.

### Industrial Applicability

The present invention is applicable to industry, and particularly to industries that produce gaseous emissions that need to be processed into less harmful forms prior to release into the environment. There are many industries that produce such gases and there are often regulatory requirements for the reduction of toxic or environmentally damaging gaseous emissions. Additionally, industrial processes produce gases suitable for a post-combustion gas fuel, such as hydrogen or carbon monoxide and hydrogen, potentially permitting synergies between industries. This invention assists in meeting at least some regulatory requirements for the release of gaseous emissions into the environment.

## Claims

1. A post combustion apparatus (100) comprising:
a) a furnace flue inlet (110) that is configured to connect to a furnace (500) and to permit ingress of furnace exhaust gas into the post combustion apparatus (100), thereby defining an extreme upstream location of furnace exhaust gas entering the apparatus;
b) a post combustion exhaust chamber (130) comprising an inlet (140) and an outlet (150), the outlet (150) defining the extreme downstream location of processed furnace exhaust gas exiting the apparatus (100), such that gas flows between said extreme upstream location and said extreme downstream location;
c) a cooler (210) comprising an inlet, connected to the furnace flue inlet (110), an outlet (220) and a cooling element (230);
d) a mixing chamber (330) comprising an inlet, connected to the outlet (220) of the cooler (210), an outlet (350), and a post-combustion gas fuel injection port (340) located downstream of the mixing chamber inlet that is configured to introduce and mix post-combustion gas fuel with furnace exhaust gas;
e) a non-return valve (325) interposed between the cooler (210) outlet and the mixing chamber (330) inlet, which non-return valve (325) is configured to permit the flow of gas substantially in one direction only from the cooler (210) to the mixing chamber (330);
f) a combustion expansion chamber (360) comprising an inlet (380), connected to the mixing chamber outlet (350), and an outlet (390) connected to the post combustion exhaust chamber inlet (140);
g) an igniter (700) located downstream of the fuel injection port (340) within the mixing chamber (330) or the combustion expansion chamber (360);
h) a gas power system (310) connected to the cooler (210) downstream the cooler (210) and connected to the non-return valve (325) upstream the non-return valve (325) and configured to drive furnace exhaust gas and particulates from the furnace flue inlet (110) downstream through the post combustion apparatus (100) and to the post combustion exhaust chamber outlet (150);
i) wherein a cross-sectional combustion expansion chamber area, bounded by internal walls of the combustion expansion chamber (360) and perpendicular to the gas flow, is larger than a cross-sectional mixing chamber area, defined by internal walls of the mixing chamber (330) and perpendicular to the gas flow; and
j) wherein a cross-sectional post combustion exhaust chamber area, bounded by internal walls of the post combustion exhaust chamber (130) and perpendicular to the gas flow, is larger than the cross-sectional mixing chamber area.

2. A post combustion apparatus (100) as claimed in claim 1, wherein the cross-sectional post combustion exhaust chamber area is at least double that of the mixing chamber area.

3. A post combustion apparatus (100) as claimed in any one of the preceding claims, wherein the furnace flue inlet (110) is connected to the furnace (500) and wherein the post combustion exhaust chamber outlet (150) is connected to an exhaust stack, wherein the exhaust path between the furnace (500) and the exhaust stack is sealed from the air such that no additional oxygen can be introduced into the system.

4. A post combustion apparatus (100) as claimed in any one of the preceding claims, wherein the post-combustion gas fuel injection port (340) has at least one nozzle (900, 910, 920) within the mixing chamber.

5. A post combustion apparatus (100) as claimed in claim 4, wherein the at least one nozzle (900, 910, 920) is angled to swirl post-combustion gas fuel at least partially radially perpendicular to the flow direction of the furnace exhaust gas.

6. A post combustion apparatus (100) as claimed in claim 4 or claim 5, wherein the at least one nozzle (900, 910, 920) is angled to swirl the post-combustion gas fuel in the general downstream direction.

7. A post combustion apparatus (100) as claimed in any one of claims 5 to 6, wherein the angle of the at least one nozzle (900, 910, 920) is capable of being varied.

8. A post combustion apparatus (100) as claimed in any one of the previous claims, wherein the igniter (700) is at least one spark plug located proximal the inlet of the combustion expansion chamber (360).

9. A post combustion apparatus (100) as claimed in any one of the previous claims, wherein a matter collection chamber (460) is installed between the combustion expansion chamber (360) and the post combustion exhaust chamber (130), which matter collection chamber (460) comprises a gas passage (1200) and a matter collection vessel.

10. A post combustion apparatus (100) as claimed in claim 9, wherein the matter collection vessel has at least one magnet, preferably at least one electromagnet (1210, 1220, 1230) in close association with it.

11. A post combustion apparatus (100) as claimed in claim 10, wherein the matter collection vessel comprises a water tray (1250) between the exhaust flow and the at least one electromagnet (1210, 1220, 1230).

12. A process of post combustion including the steps of:
a) feeding furnace exhaust gas through a furnace flue inlet (110) from a furnace that permits ingress of furnace exhaust gas into a post combustion apparatus (100), thereby defining an extreme upstream location of furnace exhaust gas entering the apparatus;
b) exhausting processed furnace exhaust gas from an outlet (150) in a post combustion exhaust chamber (130) comprising an inlet (140) and the outlet (150), the outlet (150) defining the extreme downstream location of processed furnace exhaust gas exiting the apparatus (100), such that gas flows between said extreme upstream location and said extreme downstream location;
c) feeding furnace exhaust gas into a cooler (210) comprising an inlet from the furnace flue inlet (110), an outlet (220) and a cooling element (230) and cooling the furnace exhaust gas;
d) feeding cooled furnace exhaust gas into a mixing chamber (330) comprising an inlet, connected to the outlet (220) of the cooler (210), an outlet (350), and a post-combustion gas fuel injection port (340) located downstream of the mixing chamber inlet and mixing the cooled furnace exhaust gas with post-combustion gas fuel;
e) preventing backflow of gas by passing gas through a non-return valve (325) interposed between the cooler (210) outlet and the mixing chamber (330) inlet, which non-return valve (325) is configured to permit the flow of gas substantially in one direction only from the cooler (210) to the mixing chamber (330);
f) passing the mixed cooled furnace exhaust gas and post-combustion gas fuel into a combustion expansion chamber (360) comprising an inlet (380), connected to the mixing chamber outlet (350), and an outlet (390) connected to the post combustion exhaust chamber inlet (140);
g) igniting the mixed cooled furnace exhaust gas and post-combustion gas fuel using an igniter (700) located downstream of the fuel injection port (340) within the mixing chamber (330) or the combustion expansion chamber (360);
h) driving the gas in the post combustion process by use of a gas power system (310) connected to the cooler (210) downstream the cooler (210) and connected to the non-return valve (325) upstream the non-return valve (325) that drives gas from the furnace flue inlet downstream through the post combustion apparatus (100) and to the post combustion exhaust chamber outlet (150);
i) wherein the combusting cooled furnace exhaust gas and post-combustion gas fuel mixture is free to expand through the combustion expansion chamber (360) due to the combustion expansion chamber having a cross-sectional combustion expansion chamber area, bounded by internal walls of the combustion expansion chamber (360) and perpendicular to the gas flow, is larger than a cross-sectional mixing chamber area, defined by internal walls of the mixing chamber (330) and perpendicular to the gas flow; and
j) wherein the combusted cooled furnace exhaust gas and post-combustion gas fuel mixture is free to exit the combustion expansion chamber (360) due to the combustion expansion chamber having a cross-sectional post combustion exhaust chamber area, bounded by internal walls of the post combustion exhaust chamber (130) and perpendicular to the gas flow, is larger than the cross-sectional mixing chamber area.

13. A process of post combustion as defined in claim 12, wherein furnace exhaust gas is cooled to between 360 K and 395 K by the cooler (210).

14. A process of post combustion as defined in any one of claims 12 to claim 13, wherein the post-combustion gas fuel is a gas capable of combustion in air with an air flame temperature of at least 1,950 °C at STP.

15. A process of post combustion as defined in any one of claims 12 to 14, wherein a matter collection vessel collects particulates downstream of the combustion expansion chamber (360), which particulates are drawn to the vessel by an electromagnetic field and captured by a water bath.

## Patentansprüche

1. Nachverbrennungsvorrichtung (100), umfassend:
a) einen Ofenabzugsrohreinlass (110), der dazu konfiguriert ist, mit einem Ofen (500) verbunden zu werden und ein Eintreten von Ofenabgas in die Nachverbrennungsvorrichtung (100) zu ermöglichen, wodurch eine äußerste stromaufwärtige Stelle, an der das Ofenabgas in die Vorrichtung eintritt, definiert wird;
b) eine Nachverbrennungsaustrittskammer (130), die einen Einlass (140) und einen Auslass (150) umfasst, wobei der Auslass (150) die äußerste stromabwärtige Stelle, an der das verarbeitete Ofenabgas aus der Vorrichtung (100) austritt, definiert, so dass Gas zwischen der äußersten stromaufwärtigen Stelle und der äußersten stromabwärtigen Stelle strömt;
c) einen Kühler (210), der einen Einlass, der mit dem Ofenabzugsrohreinlass (110) verbunden ist, einen Auslass (220) und ein Kühlelement (230) umfasst;
d) eine Mischkammer (330), die einen Einlass, der mit dem Auslass (220) des Kühlers (210) verbunden ist, einen Auslass (350) und eine Nachverbrennungsbrenngas-Einspritzöffnung (340) umfasst, die sich stromabwärts des Mischkammereinlasses befindet, die dazu konfiguriert ist, Nachverbrennungsbrenngas einzuführen und mit Ofenabgas zu mischen;
e) ein Rückschlagventil (325), das zwischen dem Auslass des Kühlers (210) und dem Einlass der Mischkammer (330) angeordnet ist, wobei das Rückschlagventil (325) dazu konfiguriert ist, den Strom von Gas im Wesentlichen nur in eine Richtung von dem Kühler (210) zu der Mischkammer (330) zu ermöglichen;
f) eine Verbrennungsexpansionskammer (360), die einen Einlass (380), der mit dem Mischkammerauslass (350) verbunden ist, und einen Auslass (390), der mit dem Nachverbrennungsaustrittskammereinlass (140) verbunden ist, umfasst;
g) einen Zünder (700), der sich stromabwärts der Kraftstoffeinspritzöffnung (340) innerhalb der Mischkammer (330) oder der Verbrennungsexpansionskammer (360) befindet;
h) ein Gasantriebssystem (310), das mit dem Kühler (210) stromabwärts des Kühlers (210) verbunden ist und mit dem Rückschlagventil (325) stromaufwärts des Rückschlagventils (325) verbunden ist und dazu konfiguriert ist, Ofenabgas und Partikel von dem Ofenabzugsrohreinlass (110) stromabwärts durch die Nachverbrennungsvorrichtung (100) und zu dem Nachverbrennungsaustrittskammerauslass (150) zu befördern;
i) wobei eine Querschnittsfläche der Verbrennungsexpansionskammer, die durch Innenwände der Verbrennungsexpansionskammer (360) begrenzt ist und senkrecht zum Gasstrom verläuft, größer ist als eine Querschnittsfläche der Mischkammer, die durch Innenwände der Mischkammer (330) definiert ist und senkrecht zum Gasstrom verläuft, und
j) wobei eine Querschnittsfläche der Nachverbrennungsaustrittskammer, die durch Innenwände der Nachverbrennungsaustrittskammer (130) begrenzt ist und senkrecht zu dem Gasstrom verläuft, größer als die Querschnittsfläche der Mischkammer ist.

2. Nachverbrennungsvorrichtung (100) nach Anspruch 1, wobei die Querschnittsfläche der Nachverbrennungsaustrittskammer mindestens doppelt so groß wie die Fläche der Mischkammer ist.

3. Nachverbrennungsvorrichtung (100) nach einem der vorhergehenden Ansprüche, wobei der Ofenabzugsrohreinlass (110) mit dem Ofen (500) verbunden ist und wobei der Nachverbrennungsaustrittskammerauslass (150) mit einem Austrittsschacht verbunden ist, wobei der Austrittsweg zwischen dem Ofen (500) und dem Austrittsschacht gegenüber der Luft abgedichtet ist, so dass kein zusätzlicher Sauerstoff in das System eingeführt werden kann.

4. Nachverbrennungsvorrichtung (100) nach einem der vorhergehenden Ansprüche, wobei die Nachverbrennungsbrenngas-Einspritzöffnung (340) mindestens eine Düse (900, 910, 920) innerhalb der Mischkammer aufweist.

5. Nachverbrennungsvorrichtung (100) nach Anspruch 4, wobei die mindestens eine Düse (900, 910, 920) abgewinkelt ist, um Nachverbrennungsbrenngas mindestens teilweise radial senkrecht zur Strömungsrichtung des Ofenabgases zu verwirbeln.

6. Nachverbrennungsvorrichtung (100) nach Anspruch 4 oder Anspruch 5, wobei die mindestens eine Düse (900, 910, 920) abgewinkelt ist, um das Nachverbrennungsbrenngas in der allgemeinen stromabwärtigen Richtung zu verwirbeln.

7. Nachverbrennungsvorrichtung (100) nach einem der Ansprüche 5 bis 6, wobei der Winkel der mindestens einen Düse (900, 910, 920) in der Lage ist, variiert zu werden.

8. Nachverbrennungsvorrichtung (100) nach einem der vorhergehenden Ansprüche, wobei der Zünder (700) mindestens eine Zündkerze ist, die sich in der Nähe des Einlasses der Verbrennungsexpansionskammer (360) befindet.

9. Nachverbrennungsvorrichtung (100) nach einem der vorhergehenden Ansprüche, wobei eine Stoffsammelkammer (460) zwischen der Verbrennungsexpansionskammer (360) und der Nachverbrennungsaustrittskammer (130) installiert ist, wobei die Stoffsammelkammer (460) einen Gasdurchgang (1200) und einen Stoffsammelbehälter umfasst.

10. Nachverbrennungsvorrichtung (100) nach Anspruch 9, wobei der Stoffsammelbehälter mindestens einen Magneten, vorzugsweise mindestens einen Elektromagneten (1210, 1220, 1230), in enger Zuordnung zu diesem aufweist.

11. Nachverbrennungsvorrichtung (100) nach Anspruch 10, wobei der Stoffsammelbehälter eine Wasserwanne (1250) zwischen dem Austrittsstrom und dem mindestens einen Elektromagneten (1210, 1220, 1230) umfasst.

12. Nachverbrennungsverfahren, die folgenden Schritte enthaltend:
a) Zuführen von Ofenabgas durch einen Ofenabzugsrohreinlass (110) von einem Ofen, der ein Eintreten von Ofenabgas in eine Nachverbrennungsvorrichtung (100) ermöglicht, wodurch eine äußerste stromaufwärtige Stelle, an der das Ofenabgas in die Vorrichtung eintritt, definiert wird;
b) Austretenlassen von verarbeitetem Ofenabgas von einem Auslass (150) in eine Nachverbrennungsaustrittskammer (130), die einen Einlass (140) und den Auslass (150) umfasst, wobei der Auslass (150) die äußerste stromabwärtige Stelle, an der das verarbeitete Ofenabgas aus der Vorrichtung (100) austritt, definiert, so dass Gas zwischen der äußersten stromaufwärtigen Stelle und der äußersten stromabwärtigen Stelle strömt;
c) Zuführen von Ofenabgas in einen Kühler (210), der einen Einlass von dem Ofenabzugsrohreinlass (110), einen Auslass (220) und ein Kühlelement (230) umfasst, und Kühlen des Ofenabgases;
d) Zuführen von gekühltem Ofenabgas in eine Mischkammer (330), die einen Einlass, der mit dem Auslass (220) des Kühlers (210) verbunden ist, einen Auslass (350) und eine Nachverbrennungsbrenngas-Einspritzöffnung (340) umfasst, die sich stromabwärts des Mischkammereinlasses befindet, und Mischen des gekühlten Ofenabgases mit Nachverbrennungsbrenngas;
e) Verhindern eines Rückflusses von Gas, indem Gas durch ein Rückschlagventil (325) geleitet wird, das zwischen dem Auslass des Kühlers (210) und dem Einlass der Mischkammer (330) angeordnet ist, wobei das Rückschlagventil (325) dazu konfiguriert ist, den Gasstrom im Wesentlichen nur in einer Richtung von dem Kühler (210) zu der Mischkammer (330) zu ermöglichen;
f) Leiten des gemischten gekühlten Ofenabgases und Nachverbrennungsbrenngases in eine Verbrennungsexpansionskammer (360), die einen Einlass (380), der mit dem Mischkammerauslass (350) verbunden ist, und einen Auslass (390), der mit dem Nachverbrennungsaustrittskammereinlass (140) verbunden ist, umfasst;
g) Zünden des gemischten gekühlten Ofenabgases und Nachverbrennungsbrenngases unter Verwendung eines Zünders (700), der sich stromabwärts der Kraftstoffeinspritzöffnung (340) innerhalb der Mischkammer (330) oder der Verbrennungsexpansionskammer (360) befindet;
h) Befördern des Gases in dem Nachverbrennungsverfahren unter Verwendung eines Gasantriebssystems (310), das mit dem Kühler (210) stromabwärts des Kühlers (210) verbunden ist und mit dem Rückschlagventil (325) stromaufwärts des Rückschlagventils (325) verbunden ist und das Gas von dem Ofenabzugsrohreinlass stromabwärts durch die Nachverbrennungsvorrichtung (100) und zu dem Nachverbrennungsaustrittskammerauslass (150) befördert;
i) wobei die verbrennende Mischung aus gekühltem Ofenabgas und Nachverbrennungsbrenngas dadurch frei über die Verbrennungsexpansionskammer (360) expandieren kann, dass die Verbrennungsexpansionskammer eine Querschnittsfläche der Verbrennungsexpansionskammer aufweist, die durch Innenwände der Verbrennungsexpansionskammer (360) begrenzt ist und senkrecht zum Gasstrom verläuft, größer ist als eine Querschnittsfläche der Mischkammer, die durch Innenwände der Mischkammer (330) definiert ist und senkrecht zum Gasstrom verläuft, und
j) wobei die verbrannte Mischung aus gekühltem Ofenabgas und Nachverbrennungsbrenngas dadurch frei aus der Verbrennungsexpansionskammer (360) austreten kann, dass die Verbrennungsexpansionskammer eine Querschnittsfläche der Verbrennungsexpansionskammer aufweist, die durch Innenwände der Verbrennungsexpansionskammer (130) begrenzt ist und senkrecht zum Gasstrom verläuft, größer ist als eine Querschnittsfläche der Mischkammer ist.

13. Nachverbrennungsverfahren nach Anspruch 12, wobei das Ofenabgas durch den Kühler (210) auf zwischen 360 K und 395 K abgekühlt wird.

14. Nachverbrennungsverfahren nach einem der Ansprüche 12 bis Anspruch 13, wobei das Nachverbrennungsbrenngas ein Gas ist, das zu einer Verbrennung in Luft mit einer Luftflammentemperatur von mindestens 1.950 °C bei STP-Bedingungen in der Lage ist.

15. Nachverbrennungsverfahren nach einem der Ansprüche 12 bis 14, wobei ein Stoffsammelbehälter Partikel stromabwärts der Verbrennungsexpansionskammer (360) sammelt, wobei diese Partikel durch ein elektromagnetisches Feld zu dem Behälter gezogen und durch ein Wasserbad aufgefangen werden.

## Revendications

1. Appareil de post-combustion (100) comprenant :
a) une entrée de carneau de four (110) qui est configurée pour se connecter à un four (500) et pour permettre l'admission des gaz d'échappement du four dans l'appareil de post-combustion (100), définissant ainsi un emplacement à l'extrême amont des gaz d'échappement du four entrant dans l'appareil ;
b) une chambre d'échappement de post-combustion (130) comprenant une entrée (140) et une sortie (150), la sortie (150) définissant l'emplacement à l'extrême aval des gaz d'échappement du four traités sortant de l'appareil (100), de sorte que les gaz s'écoulent entre ledit emplacement à l'extrême amont et ledit emplacement à l'extrême aval ;
c) un refroidisseur (210) comprenant une entrée, connectée à l'entrée de carneau du four (110), une sortie (220) et un élément de refroidissement (230) ;
d) une chambre de mélange (330) comprenant une entrée, connectée à la sortie (220) du refroidisseur (210), une sortie (350), et un orifice d'injection de combustible gazeux de post-combustion (340) situé en aval de l'entrée de la chambre de mélange qui est configuré pour introduire et mélanger le combustible gazeux de post-combustion avec les gaz d'échappement du four ;
e) un clapet anti-retour (325) interposé entre la sortie du refroidisseur (210) et l'entrée de la chambre de mélange (330), lequel clapet anti-retour (325) est configuré pour permettre l'écoulement de gaz sensiblement dans une seule direction depuis le refroidisseur (210) jusqu'à la chambre de mélange (330) ;
f) une chambre d'expansion de combustion (360) comprenant une entrée (380), connectée à la sortie de chambre de mélange (350), et une sortie (390) connectée à l'entrée de chambre d'échappement de post-combustion (140) ;
g) un allumeur (700) situé en aval de l'orifice d'injection de carburant (340) à l'intérieur de la chambre de mélange (330) ou de la chambre d'expansion de combustion (360)
h) un système d'alimentation en gaz (310) connecté au refroidisseur (210) en aval du refroidisseur (210) et connecté au clapet anti-retour (325) en amont du clapet anti-retour (325) et configuré pour entraîner les gaz d'échappement du four et les particules depuis l'entrée de carneau du four (110) en aval à travers l'appareil de post-combustion (100) et jusqu'à la sortie de chambre d'échappement de post-combustion (150) ;
i) dans lequel une section transversale de la chambre d'expansion de combustion, délimitée par des parois internes de la chambre d'expansion de combustion (360) et perpendiculaire à l'écoulement de gaz, est plus grande qu'une section transversale de la chambre de mélange, définie par des parois internes de la chambre de mélange (330) et perpendiculaire à l'écoulement de gaz ; et
j) dans lequel une section transversale de la chambre d'échappement de post-combustion, délimitée par des parois internes de la chambre d'échappement de post-combustion (130) et perpendiculaire à l'écoulement de gaz, est plus grande que la section transversale de la chambre de mélange.

2. Appareil de post-combustion (100) selon la revendication 1, dans lequel la section transversale de la chambre d'échappement de post-combustion est au moins le double de celle de la chambre de mélange.

3. Appareil de post-combustion (100) selon l'une quelconque des revendications précédentes, dans lequel l'entrée de carneau du four (110) est connectée au four (500) et dans lequel la sortie de chambre d'échappement de post-combustion (150) est connectée à une cheminée d'échappement, dans lequel
le trajet d'échappement entre le four (500) et la cheminée d'échappement est isolé de l'air de sorte que de l'oxygène supplémentaire ne puisse pas être introduit dans le système.

4. Appareil de post-combustion (100) selon l'une quelconque des revendications précédentes, dans lequel l'orifice d'injection de combustible gazeux de post-combustion (340) comporte au moins une buse (900, 910, 920) à l'intérieur de la chambre de mélange.

5. Appareil de post-combustion (100) selon la revendication 4, dans lequel l'au moins une buse (900, 910, 920) est inclinée pour faire tourbillonner le combustible gazeux de post-combustion au moins partiellement radialement perpendiculairement à la direction d'écoulement des gaz d'échappement du four.

6. Appareil de post-combustion (100) selon la revendication 4 ou la revendication 5, dans lequel l'au moins une buse (900, 910, 920) est inclinée pour faire tourbillonner le combustible gazeux de post-combustion dans la direction générale vers l'aval.

7. Appareil de post-combustion (100) selon l'une quelconque des revendications 5 à 6, dans lequel l'angle de l'au moins une buse (900, 910, 920) peut être modifié.

8. Appareil de post-combustion (100) selon l'une quelconque des revendications précédentes, dans lequel l'allumeur (700) est au moins une bougie d'allumage située à proximité de l'entrée de la chambre d'expansion de combustion (360).

9. Appareil de post-combustion (100) selon l'une quelconque des revendications précédentes, dans lequel une chambre de collecte de matière (460) est installée entre la chambre d'expansion de combustion (360) et la chambre d'échappement de post-combustion (130), laquelle chambre de collecte de matière (460) comprend un passage de gaz (1200) et une cuve de collecte de matière.

10. Appareil de post-combustion (100) selon la revendication 9, dans lequel la cuve de collecte de matière comporte au moins un aimant, de préférence au moins un électroaimant (1210, 1220, 1230) en association étroite avec celui-ci.

11. Appareil de post-combustion (100) selon la revendication 10, dans lequel la cuve de collecte de matière comprend un bac à eau (1250) entre le flux d'échappement et l'au moins un électroaimant (1210, 1220, 1230).

12. Procédé de post-combustion comprenant les étapes de :
a) alimentation des gaz d'échappement du four via une entrée de carneau du four (110) depuis un four qui permet l'admission des gaz d'échappement du four dans un appareil de post-combustion (100), définissant ainsi un emplacement à l'extrême amont des gaz d'échappement du four entrant dans l'appareil ;
b) évacuation des gaz d'échappement du four traités à partir d'une sortie (150) dans une chambre d'échappement de post-combustion (130) comprenant une entrée (140) et la sortie (150), la sortie (150) définissant l'emplacement à l'extrême aval des gaz d'échappement du four traités sortant de l'appareil (100), de telle sorte que les gaz s'écoulent entre ledit emplacement à l'extrême amont et ledit emplacement à l'extrême aval ;
c) alimentation des gaz d'échappement du four dans un refroidisseur (210) comprenant une entrée depuis l'entrée de carneau du four (110), une sortie (220) et un élément de refroidissement (230) et refroidissement des gaz d'échappement du four ;
d) alimentation des gaz d'échappement du four refroidis dans une chambre de mélange (330) comprenant une entrée, connectée à la sortie (220) du refroidisseur (210), une sortie (350) et un orifice d'injection de combustible gazeux de post-combustion (340) situé en aval de l'entrée de chambre de mélange et mélange des gaz d'échappement refroidis du four avec le combustible gazeux de post-combustion ;
e) prévention du reflux de gaz en faisant passer les gaz via un clapet anti-retour (325) interposé entre la sortie du refroidisseur (210) et l'entrée de la chambre de mélange (330), lequel clapet anti-retour (325) est configuré pour permettre l'écoulement de gaz sensiblement dans un seul sens du refroidisseur (210) vers la chambre de mélange (330) ;
f) passage des gaz d'échappement du four refroidis mélangés et du combustible gazeux de post-combustion dans une chambre d'expansion de combustion (360) comprenant une entrée (380), connectée à la sortie de chambre de mélange (350), et une sortie (390) connectée à l'entrée de la chambre d'échappement post-combustion (140) ;
g) allumage des gaz d'échappement du four refroidis mélangés et du combustible gazeux de post-combustion à l'aide d'un allumeur (700) situé en aval de l'orifice d'injection de combustible (340) dans la chambre de mélange (330) ou la chambre d'expansion de combustion (360) ;
h) entraînement du gaz dans le processus de post-combustion à l'aide d'un système d'alimentation en gaz (310) connecté au refroidisseur (210) en aval du refroidisseur (210) et connecté au clapet anti-retour (325) en amont du clapet anti-retour (325) qui entraîne les gaz depuis l'entrée du carneau du four vers l'aval à travers l'appareil de post-combustion (100) et vers la sortie de chambre d'échappement de post-combustion (150) ;
i) dans lequel le mélange des gaz d'échappement de four refroidis par combustion et du combustible gazeux de post-combustion est libre de se dilater à travers la chambre d'expansion de combustion (360) du fait que la chambre d'expansion de combustion comporte une section transversale de chambre d'expansion de combustion, délimitée par des parois internes de la chambre d'expansion de combustion (360) et perpendiculaire à l'écoulement de gaz, qui est plus grande qu'une section transversale de la chambre de mélange, définie par des parois internes de la chambre de mélange (330) et perpendiculaire à l'écoulement de gaz ; et
j) dans lequel le mélange des gaz d'échappement du four refroidis par combustion et du combustible gazeux de post-combustion est libre de sortir de la chambre d'expansion de combustion (360) du fait que la chambre d'expansion de combustion comporte une section transversale de la chambre d'échappement de post-combustion, délimitée par des parois internes de la chambre d'échappement de post-combustion (130) et perpendiculaire à l'écoulement de gaz, qui est plus grande que la section transversale de la chambre de mélange.

13. Procédé de post-combustion selon la revendication 12, dans lequel les gaz d'échappement du four sont refroidis entre 360 K et 395 K par le refroidisseur (210).

14. Procédé de post-combustion selon l'une quelconque des revendications 12 à la revendication 13, dans lequel le combustible gazeux de post-combustion est un gaz capable de combustion dans l'air avec une température de flamme d'air d'au moins 1950 °C à STP.

15. Procédé de post-combustion selon l'une quelconque des revendications 12 à 14, dans lequel une cuve de collecte de matière collecte des particules en aval de la chambre d'expansion de combustion (360), lesquelles particules sont attirées vers la cuve par un champ électromagnétique et capturées par un bain d'eau.
